# FASCICULE DE BREVET EUROPEEN

(11) **EP 0 449 703 B1**
(45) Date de publication et mention de la délivrance du brevet: **22.12.1993**
(21) Numéro de dépôt: 91400740.6
(22) Date de dépôt: 20.03.1991
(51) Int. Cl.: B60T 13/575

(54) **Procédé de réglage de la valeur du saut d'un servomoteur d'assistance au freinage**
Verfahren zum Regeln des Schwellenwertes an einem Bremskraftverstärker
Procedure for regulating the threshold value of a brake servo-unit

(30) Priorité: 29.03.1990 FR 9004007
(43) Date de publication de la demande: 02.10.1991
(73) Titulaire: ALLIEDSIGNAL EUROPE SERVICES TECHNIQUES, 93700 Drancy (FR)
(72) Inventeur: Gautier, Jean-Pierre, 126 rue de Stalingrad, F-93700 Drancy (FR); Perez, Miguel, 126 rue de Stalingrad, F-93700 Drancy (FR); Verbo, Ulysse, 126 rue de Stalingrad, F-93700 Drancy (FR)
(74) Mandataire: Bentz, Jean-Paul

(56) Documents cités:
- EP-A- 0 341 101
- GB-A- 2 104 989
- US-A- 4 354 423

## Description

L'invention concerne les servomoteurs d'assistance au freinage du type à dépression et s'applique plus particulièrement au réglage du saut de tels servomoteurs.

Dans ce qui suit, on appelle avant la direction orientée vers la gauche des dessins, c'est-à-dire vers l'avant du véhicule sur lequel est monté un tel servomoteur.

Un servomoteur d'assistance au freinage du type à dépression, comporte généralement, disposés coaxialement, un piston, un plongeur logé dans le piston et solidaire d'une tige de commande, un disque de réaction et une tige de poussée comportant une tête élargie, une des faces du disque étant maintenue en contact avec la tête élargie de la tige de poussée au moyen d'une virole et une partie annulaire de son autre face étant en contact avec le piston, un jeu étant déterminé au repos entre la partie centrale de l'autre face du disque et le plongeur.

Un tel servomoteur est décrit dans le document EP-A-0 341 101 sur lequel est basé le préambule de la revendication principale.

Habituellement, le piston servant à transmettre la force d'assistance à la tige de poussée agit sur cette dernière au travers d'un disque de réaction réalisé en un matériau déformable tel qu'un élastomère. Au repos, un faible jeu existe entre l'extrémité avant du plongeur et le disque de réaction. Lorsque le conducteur du véhicule commence à actionner la pédale de frein, ce faible jeu permet au plongeur de se déplacer immédiatement vers l'avant pour commander les moyens d'assistance et assurer une réponse immédiate des freins.

La transmission à la tige de poussée, au travers du disque de réaction, de la force d'assistance exercée sur le piston a pour effet de comprimer axialement la partie périphérique du disque de réaction proportionnellement à la force d'assistance. Cette compression de la partie périphérique du disque de réaction a pour conséquence une déformation de la partie centrale de ce disque vers la face avant du plongeur.

Lorsque la force d'assistance dépasse un certain seuil, le jeu existant initialement au repos entre le disque de réaction et la face avant du plongeur est rattrapé, de sorte que le plongeur est en contact avec le disque de réaction et que ce dernier renvoie vers la pédale de frein une force de réaction représentative de l'effort de freinage appliqué sur les freins du véhicule. Cet agencement bien connu permet au conducteur de doser l'effort de freinage qu'il exerce sur la pédale en fonction de la résistance qu'il rencontre, qui augmente avec cet effort.

Il ressort de l'explication qui précède que la réaction à la pédale ne commence à apparaître que lorsque la force d'assistance engendrée par l'actionnement de la pédale de frein dépasse un certain seuil. Ce seuil est appelé le "saut" du servomoteur. Il constitue une caractéristique importante du servomoteur. En effet, si l'existence du saut est imposée pour une réponse immédiate des freins lors d'un actionnement de la pédale, les constructeurs de véhicules automobiles souhaitent généralement que la valeur de ce saut reste dans certaines limites pour que l'assistance n'atteigne pas une valeur trop grande sans augmentation de la réaction sur la pédale.

Cependant, compte tenu notamment des tolérances de fabrication des différentes pièces constituant le servomoteur, il peut exister des différences importantes dans la valeur du saut d'un servomoteur à un autre. De plus, il n'existe actuellement aucun moyen rapide et pratique pour maîtriser ou régler la valeur du saut du servomoteur, de sorte que les exigences précédemment mentionnées ne sont pas toujours satisfaites, sauf à effectuer des contrôles complexes et onéreux.

La présente invention a précisément pour objet un servomoteur dont on peut régler la valeur du saut de façon unitaire, c'est-à-dire que le saut de chaque servomoteur puisse être réglé indépendamment du saut d'un autre servomoteur, de façon simple et sans augmentation du coût sensible du servomoteur ainsi réglé.

Selon l'invention, la virole est solidaire du piston, la tête élargie présente sensiblement la même surface que celle du disque de réaction, un moyen élastique précontraint est disposé entre une partie solidaire du piston et la tige de poussée et la précontrainte dudit moyen élastique est réglable.

De préférence, cette partie solidaire du piston est la virole elle-même.

EP-A-0 341 101 décrit l'utilisation d'un ressort pour modifier la courbe au niveau du point de saturation du servomoteur. La virole n'est alors pas solidaire du piston.

Le ressort n'est donc pas disposé entre une partie solidaire du piston et la tige de poussée. D'où son effet très différent.

GB-A-2 104 989 décrit l'utilisation d'un ressort disposé entre tige de poussée et une virole solidaire du piston. Toutefois, ce ressort n'a pour seul but que de ménager un jeu entre la tige de poussée et le disque de réaction au repos, ce qui est totalement différent.

En effet, avec les caractéristiques sus-mentionnées de l'invention, on peut obtenir une modification de la réaction, autrement dit, de ce qui est "vu" par le disque de réaction en fonction de la précontrainte appliquée au moyen élastique.

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux dessins annexés sur lesquels :

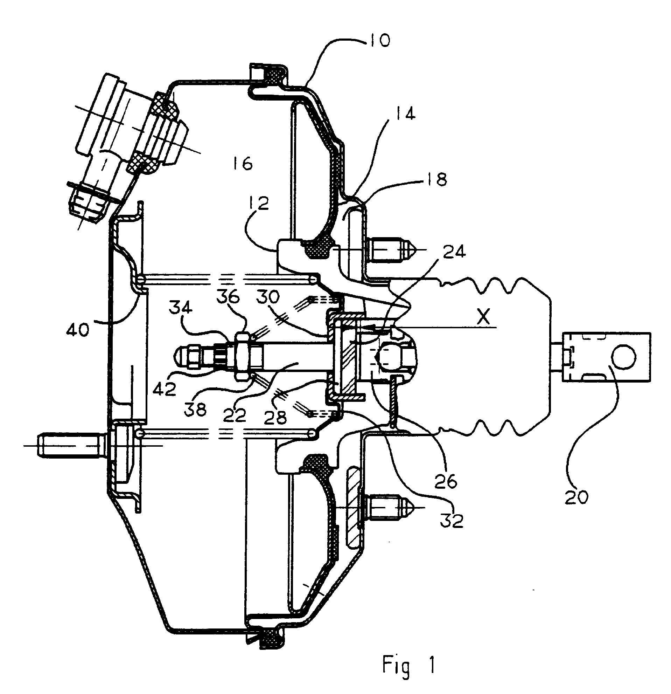

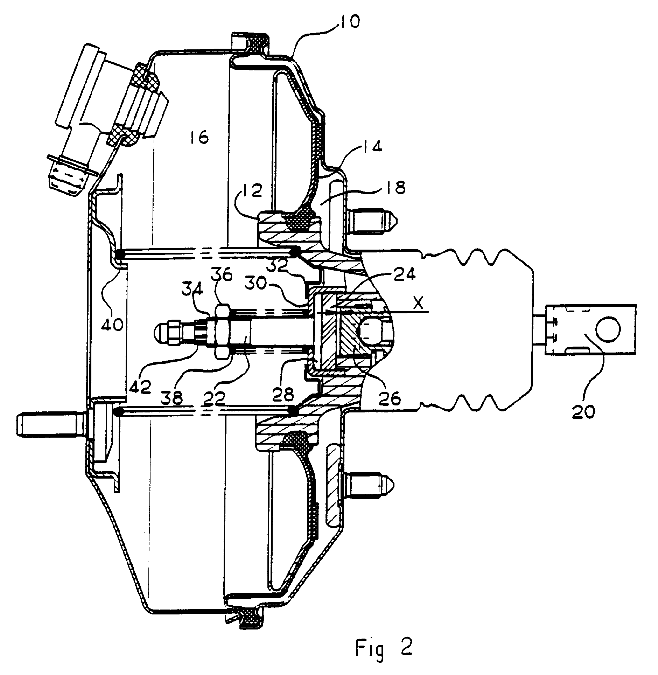

Les Figures 1 et 2 représentent schématiquement une partie d'un servomoteur d'assistance au freinage prévu pour être placé de façon habituelle entre la pédale de frein d'un véhicule et le maître-cylindre commandant le circuit de freinage, selon deux modes de réalisation de l'invention.

En référence maintenant aux deux figures, le servomoteur comprend une enveloppe 10 à l'intérieur de laquelle se trouve un piston 12 qui à l'aide d'une membrane 14 définit une chambre avant 16 reliée en permanence à une source de dépression, et une chambre arrière 18.

Un moyen de valve de modèle connu, et non représenté, établit entre les deux chambres une différence de pression, lors de l'actionnement de la tige de commande 20, pour déplacer le piston 12 et une tige de poussée 22 vers l'avant de façon à actionner le maître-cylindre.

Un disque de réaction 24 est interposé entre le piston 12 et la tige de poussée 22. Un jeu X est prévu entre la face arrière du disque de réaction 24 et la face avant d'un plongeur 26 logé dans le piston 12 et relié à la tige de commande 20. La tige de poussée 22 comporte une tête élargie 28 sensiblement de la même surface que celle du disque de réaction 24, et coulissant dans une virole 30 fixée au piston par un anneau 32, et sur sa partie avant un filetage 34 recevant un écrou 36.

Sur la Figure 1, un ressort 38 est interposé entre l'écrou 36 et l'anneau 32 solidaire du piston 12, tandis que sur la Figure 2, le ressort 38 est interposé entre l'écrou 36 et la virole 30 qui est solidaire du piston 12. Cet écrou 36 peut être tourné de l'extérieur du servomoteur par l'ouverture 40, la tige de poussée pouvant être maintenue contre une rotation par des cannelures 42.

Le servomoteur non encore équipé du maître-cylindre peut être réglé de la manière suivante : un premier effort sur la pédale de frein liée à la tige de commande 20 agit sur le moyen de valve de façon à établir une différence de pression entre les chambres 16 et 18, ce qui provoque l'avancement du piston 12 et de la virole 30, cette dernière poussant la tige de poussée 22 contre un dispositif de mesure à l'aide du ressort 38, préalablement précontraint par le vissage de l'écrou 36 sur la tige de poussée. On constate que dans ce premier temps aucune contrainte n'est appliquée au disque de réaction 24.

L'effort sur la tige de commande augmentant, le ressort 38 se comprime, la tête élargie 28 de la tige de poussée appuie sur le disque de réaction 24 et déforme ce dernier de façon à ce qu'il vienne en contact avec la face avant du plongeur 26, c'est-à-dire en comblant le jeu X. Une réaction est appliquée à partir de ce moment sur la tige de commande.

La valeur d'assistance mesurée avant l'apparition de la réaction est appelée "saut" du servomoteur, comme indiqué précédemment.

On comprend que la valeur du saut peut être ajustée par vissage ou dévissage de l'écrou 36 par rapport à la tige de poussée 22 au travers de l'ouverture 40 ce qui modifie la précontrainte du ressort 38, et par conséquent la valeur de l'effort d'assistance pour laquelle le disque de réaction vient en contact avec le plongeur, soit en définitive, le saut. L'écrou est ensuite immobilisé sur la tige de poussée par les moyens habituels , tels qu'un produit de blocage.

Bien entendu, l'invention n'est pas limitée au mode de réalisation qui vient d'être décrit à titre d'exemple, mais en couvre toutes les variantes. Ainsi, on comprendra que l'invention s'applique à tous les servomoteurs d'assistance au freinage, quelle que soit leur structure particulière.

De même le réglage de la précontrainte du ressort 38 peut être obtenu par d'autres moyens, tel que le coulissement forcé d'une bague sur la tige de poussée, celle-ci étant maintenue à cet effet.

## Revendications

1. Servomoteur d'assistance au freinage du type à dépression, comportant, disposés coaxialement, un piston (12), un plongeur (26) logé dans le piston (12) et solidaire d'une tige de commande (20), un disque de réaction (24), une tige de poussée (22) comportant une tête élargie (28) présentant sensiblement la même surface que celle du disque de réaction (24), une des faces dudit disque (24) étant maintenue en contact avec ladite tête élargie (28) de la tige de poussée (22) au moyen d'une virole (30) et une partie annulaire de son autre face étant en contact avec ledit piston (12), ledit servomoteur étant caractérisé en ce qu'un jeu (X) est déterminé au repos entre la partie centrale de ladite autre face dudit disque (24) et ledit plongeur (26), en ce que ladite virole (30) est solidaire dudit piston (12), en ce qu'un moyen élastique précontraint (38) est disposé entre une partie solidaire dudit piston (12) et la tige de poussée (22) et en ce que la précontrainte dudit moyen élastique (38) est réglable.

2. Servomoteur selon la revendication 1, caractérisé en ce que ladite partie solidaire dudit piston (12) est ladite virole (30).

3. Servomoteur selon l'une quelconque des revendications précédentes, caractérisé en ce que ledit moyen élastique (38) est un ressort.

4. Servomoteur selon l'une quelconque des revendications précédentes, caractérisé en ce que ledit moyen élastique (38) est réglable au moyen d'une butée.

5. Servomoteur selon la revendication 4, caractérisé en ce que ladite butée est un écrou (36).

6. Servomoteur selon la revendication 4, caractérisé en ce que ladite butée est une bague à coulissement forcé.

## Patentansprüche

1. Unterdruck-Bremskraftverstärker, der koaxial angeordnet enthält; einen Kolben (12), einen im Kolben (12) angeordneten Tauchkolben (26), der mit einer Steuerstange (20) verbunden ist, eine Reaktionsscheibe (24) und eine Schubstange (22) mit einem vergrößerten Kopf (28), der im wesentlichen die gleiche Fläche aufweist wie die Reaktionsscheibe (24), wobei eine der Seiten der Scheibe (24) durch einen Ring (30) in Berührung mit dem vergrößerten Kopf (28) der Schubstange (22) gehalten wird und ein ringförmiger Bereich ihrer anderen Seite sich in Berührung mit dem Kolben (12) befindet, wobei der Bremskraftverstärker dadurch gekennzeichnet ist, daß in der Ruhestellung zwischen dem Mittenbereich der anderen Seite der Scheibe (24) und dem Tauchkolben (26) ein Spiel (X) bestimmt ist, daß der Ring (30) mit dem Kolben (12) verbunden ist, daß ein vorgespanntes elastischen Mittel (38) zwischen einem fest mit dem Kolben (12) verbundenen Abschnitt und der Schubstange (22) angeordnet ist, und daß die Vorspannung des elastischen Mittels (38) einstellbar ist.

2. Bremskraftverstärker nach Anspruch 1, dadurch gekennzeichnet, daß der fest mit dem Kolben (12) verbundenen Abschnitt der Ring (30) ist.

3. Bremskraftverstärker nach einem der vorhergehenden Ansprüche, dadurch gekennzeichnet, daß das elastische Mittel (38) eine Feder ist.

4. Bremskraftverstärker nach einem der vorhergehenden Ansprüche, dadurch gekennzeichnet, daß das elastische Mittel (38) mittels eines Anschlages einstellbar ist.

5. Bremskraftverstärker nach Anspruch 4, dadurch gekennzeichnet, daß der Anschlag eine Mutter (36) ist.

6. Bremskraftverstärker nach Anspruch 4, dadurch gekennzeichnet, daß der Anschlag ein zwangsverschobenes Ringelement ist.

## Claims

1. Vacuum-type brake-booster comprising, arranged coaxially, a piston (12), a plunger (26) seated in the piston (12) and fixed to a control rod (20), a reaction disk (24) and a push rod (22) comprising a widened head (28) having essentially the same surface area as that of the reaction disk (24), one of the faces of said disk (24) being held in contact with said widened head (28) of the push rod (22) by means of a collar (30) and an annular part of its other face being in contact with said piston (12), said booster being characterized in that a play (X) is determined, at rest, between the central part of said other face of said disk (24) and said plunger (26), in that said collar (30) is fixed to said piston (12), in that a prestressed elastic means (38) is arranged between a part fixed to said piston (12) and the push rod (22) and in that the prestress of said elastic means (38) is adjustable.

2. Booster according to Claim 1, characterized in that said part fixed to said piston (12) is said collar (30).

3. Booster according to any of the preceding claims, characterized in that said elastic means (38) is a spring.

4. Booster according to any of the preceding claims, characterized in that said elastic means (38) is adjustable by means of a stop.

5. Booster according to Claim 4, characterized in that said stop is a nut (36).

6. Booster according to Claim 4, characterized in that said stop is a ring with forced sliding.
